# EUROPÄISCHE PATENTSCHRIFT

(11) **EP 0 826 442 B1**
(45) Veröffentlichungstag und Bekanntmachung des Hinweises auf die Patenterteilung: **26.02.2003**
(21) Anmeldenummer: 97110197.7
(22) Anmeldetag: 21.06.1997
(51) Int. Cl.: B21D 53/26, B60B 1/08, B60B 3/04

(54) **Fahrzeugrad**
Vehicle wheel
Roue de véhicule

(30) Priorität: 24.08.1996 DE 19634214
(43) Veröffentlichungstag der Anmeldung: 04.03.1998
(73) Patentinhaber: Dr.Ing.h.c. F. Porsche Aktiengesellschaft, 70435 Stuttgart (DE)
(72) Erfinder: Stach, Jens, 71735 Eberdingen (DE)

(56) Entgegenhaltungen:
- EP-A- 0 547 313
- DE-A- 4 430 488
- DE-A- 4 442 465

## Beschreibung

Die Erfindung bezieht sich auf ein Verfahren zum Herstellen eines Fahrzeugrades nach dem Oberbegriff der Ansprüche 1 und 2.

Aus der EP 0 547 313 B1 ist ein zweiteiliges Fahrzeugrad bekannt, dessen Hohlspeichen aufweisender Felgenstern mit einem Felgenbett über eine Reibschweißung verbunden ist, wozu zwei Schweißringe vorgesehen sind. Desweiteren ist aus der DE 44 42 465 A1 ein Fahrzeugrad bekannt, dessen Felgenstern einen Anguß zum Ausformen des Felgenbettes aufweist.

Die Aufgabe der Erfindung besteht darin, ein Fahrzeugrad mit Hohlspeichen zu schaffen, das einfach herzustellen ist und ein geringes Gewicht aufweist.

Diese Aufgabe wird durch ein Verfahren gemäß Anspruch 1 oder 2 gelöst.

Die mit der Erfindung hauptsächlich erzielten Vorteile bestehen darin, die Vorteile von Hohlspeichen im Fahrzeugrad mit definiert dünnen Wandstärken zu nutzen und gleichzeitig ein Felgenbett herzustellen, welches in einer erforderlichen Wanddicke auszuwalzen ist. Hierdurch wird bei einem aus einem Guß hergestellten Fahrzeugrad eine während des Gießens unzureichend hochsteigende Schmelze zur Bildung des Felgenbettes vermieden. In einem solchen Fall ist meist keine durchgehend gleiche bzw. kein den Erfordernissen des Rades entsprechende Wanddicke des Felgenbettes gewährleistet.

Der Felgenstern und der Anguß zum Herstellen des Felgenbettes können getrennt hergestellt werden. Die Verbindung der beiden Radteile erfolgt dann über eine oder mehrere Schweißungen, wobei die Felgenteile hierzu gegenüberstehende Schweißringe in Form jeweils eines oder jeweils zweier Schweißringe aufweisen. Bei zwei Schweißringen bilden sich zwischen diesen ein Ringraum, in den die Hohlräume der Hohlspeichen einmünden.

Die Auswalzung des Angusses zur Bildung des Felgenbettes ergibt in vorteilhafter Weise ein verfestigtes Gefüge, welches den Festigkeitsanforderungen und der Dichtigkeit eines Fahrzeugrades genügt. Desweiteren wird durch die Auswalzung des Felgenbettes eine geringstmögliche, gleichbleibende Wandstärke erzielt.

Ausführungsbeispiele der Erfindung sind in den Zeichnungen dargestellt und werden im folgenden näher beschrieben.

Es zeigen
- Fig. 1: einen Schnitt durch ein einteiliges Fahrzeugrad und
- Fig. 2: einen Schnitt durch eine weitere Ausführungsform eines zweiteiligen Fahrzeugrades.

Ein Fahrzeugrad 1; 1a umfaßt einen Felgenstern 2; 2a mit Hohlrippen 3, sowie einem anschließenden Felgenbett 4; 4a. Dieses wird aus einem Anguß 5 durch einen Auswalzvorgang hergestellt.

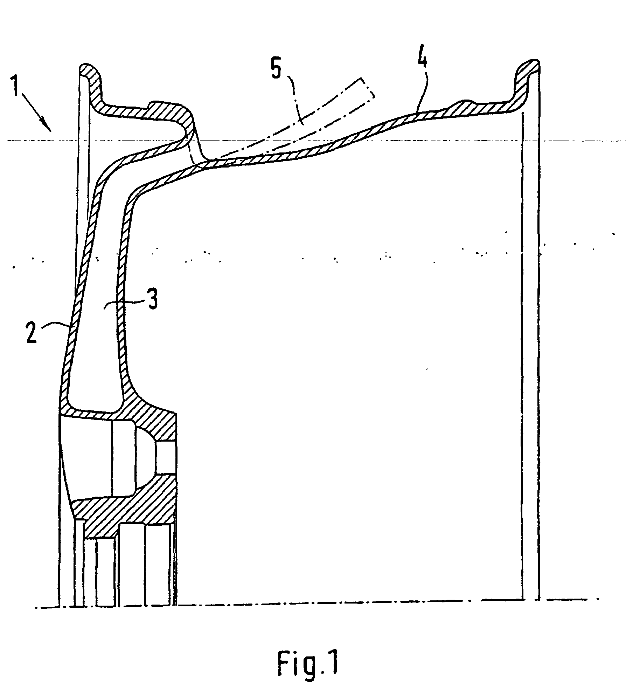

Der Anguß 5 kann gemäß Figur 1 bei einem einstückigen Fahrzeugrad 1 an den Felgenstern 2 als sogenannter Fortsatz mit angegossen sein. Hierdurch wird erreicht, daß durch ein Auswalzen zum Felgenbett 4, eine definierte Wandstärke erzielbar ist, was bei einem Gießvorgang nur mit einem großen Aufwand zu erreichen sein dürfte. Desweiteren ist das Gefüge des Werkstoffs durch den Auswalz vorgang zusätzlich verfestigt.

Die Hohlspeichen 3 dieser Ausführung sind zum Felgenbett 4 hin geöffnet, so daß der Formsand einfachst entfernt werden kann.

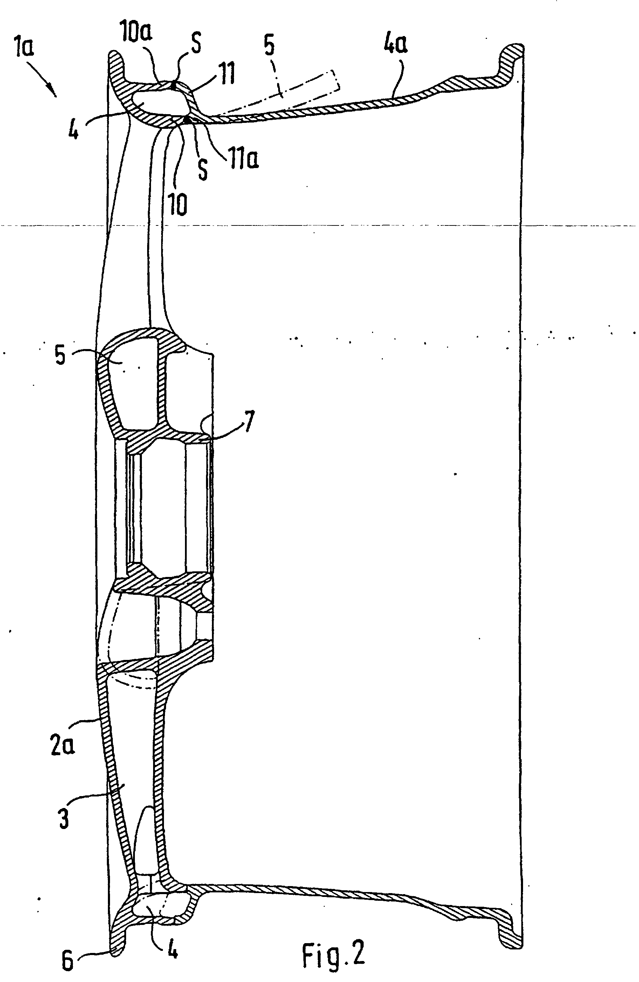

Bei einer weiteren Ausführung gemäß Figur 2 umfaßt der Felgenstern 2a ebenfalls Hohlspeichen 3, deren Hohlräume in Ringräume 4, 5 einmünden, wobei der eine Ringraum 4 im Bereich des Felgenhorns 6 und der weitere Ringraum 5 konzentrisch zur Radnabe 7 vorgesehen ist.

Das Felgenbett 4a ist ein vom Felgenstern 3 getrennt hergestelltes Gußteil und wird aus dem Anguß 5 gefertigt, der hierzu ausgewalzt bzw. gedrückt wird.

Zum Verbinden der beiden Radteile, wie Felgenstern 2a und Felgenbett 4a sind diese beiden Radteile mit sogenannten Schweißringen 10, 10a und 11, 11a versehen, die sich gegenüberstehen und mittels einer Schweißung, wie beispielsweise einer Reibschweißung oder einen Elektronenstrahlschweißung verbunden werden.

## Patentansprüche

1. Verfahren zum Herstellen eines Fahrzeugrades (1) mit einem Hohlspeichen (3) umfassenden Felgenstern (2) und einem Felgenbett (4), **dadurch gekennzeichnet, daß** der Felgenstern (2) und die Hohlspeichen (3) mit einem Anguß (5) einteilig im Gußverfahren hergestellt werden und anschließend dann der Anguß (5) zu einem Felgenbett (4) ausgewalzt wird.

2. Verfahren zum Herstellen eines Fahrzeugrades (1a) mit einem Hohlspeichen umfassenden Felgenstern (2a) und einem Felgenbett (4a), **dadurch gekennzeichnet, daß** der Felgenstern (2a) und ein Anguß (5) getrennt hergestellt werden und dann der Anguß (5) als Felgenbett (4a) ausgewalzt wird und anschließend der Felgenstern (2a) mit dem Felgenbett (4a) über mindestens eine Schweißung (S) verbunden wird.

3. Verfahren nach Anspruch 2, **dadurch gekennzeichnet, daß** die Verbindung des Felgenbettes (4a) mit dem Felgenstern (2a) über mindestens einen Schweißring (10 und 11) an jedem Felgenteil (4a 2a) erfolgt.

4. Verfahren nach den Ansprüchen 2 oder 3, **dadurch gekennzeichnet, daß** jeweils zwei Schweißringe (10, 10a und 11, 11a) zwischen dem Felgenstern (2a) und dem Felgenbett (4a) ausgebildet sind und daß diese Schweißringe zwischen sich einen Ringraum (4) einschließen, in welchen die Hohlräume der Speichen (3) einmünden.

## Claims

1. A method of producing a vehicle wheel (1) with a rim spider (2) comprising hollow spokes (3) and a rim base (4), **characterized in that** the rim spider (2) and the hollow spokes (3) are produced in one piece with a sprue (5) in the casting process and, after that, the sprue (5) is then rolled out to form a rim base (4).

2. A method of producing a vehicle wheel (1a) with a rim spider (2a) comprising hollow spokes and a rim base (4a), **characterized in that** the rim spider (2a) and a sprue (5) are produced separately and the sprue (5) is then rolled out as a rim base (4a) and, after that, the rim spider (2a) is joined to the rim base (4a) by way of at least one weld (S).

3. A method according to Claim 2, **characterized in that** the rim base (4a) is joined to the rim spider (2a) by way of at least one weld ring (10 and 11) on each rim part (4a, 2a).

4. A method according to Claim 2 or 3, **characterized in that** two respective weld rings (10, 10a and 11, 11a) are formed in each case between the rim spider (2a) and the rim base (4a), and the said weld rings enclose an annular space (4) between themselves, the cavities of the spokes (3) opening into the said annular space (4).

## Revendications

1. Procédé de fabrication d'une roue (1) d'un véhicule avec une étoile de jante (2) comprenant des rayons creux (3), et avec une base de jante (4), **caractérisé en ce que** l'étoile de jante (2) et les rayons creux (3) sont réalisés d'un seul tenant avec une masselotte (5) par un procédé de coulée, et la masselotte est laminée ensuite en une base de jante (4).

2. Procédé de fabrication d'une roue de véhicule (la) avec une étoile de jante (2a) comprenant des rayons creux et avec une base de jante (4a), **caractérisé en ce que** l'étoile de jante (2a) et une masselotte (5) sont fabriquées séparément, puis la masselotte (5) est laminée en base de jante (4a), et ensuite l'étoile de jante (2a) est reliée à la base de jante (4a) par au moins une soudure (S).

3. Procédé selon la revendication 2, **caractérisé en ce que** la liaison entre la base de jante (4a) et l'étoile de jante (2a) s'effectue par au moins un anneau de soudure (10, 11) sur chaque partie de jante (4a, 2a).

4. Procédé selon les revendications 2 ou 3, **caractérisé en ce que** deux anneaux de soudure (10, 10a et 11, 11a) sont réalisés entre l'étoile de jante (2a) et la base de jante (4a), et **en ce que** ces anneaux de soudure enferment entre eux un espace annulaire (4) dans lequel débouchent les cavités des rayons (3).
